# FASCICULE DE BREVET EUROPEEN

(11) **EP 1 701 064 B1**
(45) Date de publication et mention de la délivrance du brevet: **02.04.2008**
(21) Numéro de dépôt: 06300175.4
(22) Date de dépôt: 28.02.2006
(51) Int. Cl.: F16H 57/02, B60K 17/00

(54) **Groupe motopropulseur comprenant un dispositif antibruit**
Antriebsaggregat mit Geräuschdämpfungsvorrichtung
Propulsion system with noise-damping device

(30) Priorité: 07.03.2005 FR 0502274
(43) Date de publication de la demande: 13.09.2006
(73) Titulaire: RENAULT S.A.S., 92100 Boulogne Billancourt (FR)
(72) Inventeur: Malcuy, Stéphanie, 78500 Sartrouville (FR)

(56) Documents cités:
- WO-A-20/04104450
- FR-A- 2 050 159
- US-A- 4 506 561
- US-A- 4 779 701
- US-A- 5 042 321

## Description

La présente invention se rapporte à un groupe motopropulseur silencieux pour véhicules automobiles.

Le phénomène de bourdonnement à haut régime ou de grondement des moteurs qui est ressenti dans l'habitacle du véhicule automobile, est généralement dû aux vibrations du groupe motopropulseur. Les groupes motopropulseurs comprennent, un moteur et une boîte de vitesses, la boîte de vitesse étant logée dans un carter et le moteur comprenant une carcasse, le carter étant rendu solidaire de la carcasse. Usuellement, le carter est divisé en deux parties, une partie d'extrémité dans laquelle est logé le mécanisme de la boîte de vitesse, et une partie intermédiaire entre la partie d'extrémité et la carcasse dans laquelle sont logés l'embrayage et le différentiel ; l'arbre de transmission du moteur s'étendant généralement à l'intérieur de la carcasse et dans le prolongement de l'embrayage. Ainsi, la boîte de vitesse et le carter qui la recouvre, s'étendent en saillie de la carcasse du moteur et ont tendance à vibrer par rapport à cette carcasse lorsque le moteur est en fonctionnement. Afin d'y remédier, il a été imaginé d'augmenter le diamètre d'accouplement entre le moteur et la boîte de vitesse afin d'accroître l'inertie de la structure globale du groupe motopropulseur, mais cela conduit, à reporter la faiblesse sur la structure de la boîte de vitesses, mais aussi, cela augmente la quantité de matériau à utiliser et par conséquent le poids, et également le volume de l'ensemble.

Selon le document US 5 042 321, le carter étant constitué de deux parties, il a été imaginé de prévoir une pièce de renfort double montée sur le carter.

Un problème qui se pose alors, et que vise à résoudre la présente invention est de fournir un groupe motopropulseur moins bruyant et dont les dimensions sont sensiblement voisines de celles des groupes motopropulseurs actuels. La présente invention vise également un montage plus aisé du carter.

Pour atteindre ce but, la présente invention propose, un groupe motopropulseur comprenant un moteur et une boîte de vitesse, ladite boîte de vitesse étant destinée à être logée dans un carter, ledit moteur comportant une carcasse dans laquelle est pratiquée une ouverture de transmission, ledit carter comprenant une extrémité fermée et une extrémité de raccordement, et présentant une paroi externe, ledit carter s'étendant longitudinalement de l'extrémité fermée vers l'extrémité de raccordement en s'évasant progressivement de ladite extrémité fermée vers l'extrémité de raccordement, ledit carter étant raccordé sur l'ouverture de transmission par son extrémité de raccordement de façon à s'étendre en saillie dudit moteur; et, ledit carter est équipé d'une pièce de renfort formant nervure, ladite pièce de renfort étant montée solidaire de ladite paroi externe et s'étendant longitudinalement entre ladite extrémité fermée et ladite extrémité de raccordement pour rigidifier ledit carter et ladite carcasse, moyennant quoi les oscillations en battement de ladite boîte de vitesse par rapport audit moteur sont atténuées.

Ainsi, une caractéristique de l'invention réside dans l'augmentation de l'inertie de la liaison entre le carter et la carcasse du moteur au moyen de la pièce de renfort qui permet ainsi de rigidifier la structure de la boîte de vitesses jusqu'à son extrémité. De la sorte, les phénomènes de bruit qui sont étroitement liés à des modes propres de déformation du groupe motopropulseur, sont considérablement atténués. En rigidifiant la structure globale des groupes motopropulseurs, on remonte les modes propres de déformation au-delà des harmoniques moteurs énergétiques.

Ledit carter comprend deux parties sensiblement tronconiques, une première partie prolongée par une seconde partie, ladite première partie présentant ladite extrémité fermée, ladite seconde partie présentant ladite extrémité de raccordement, et ladite seconde partie étant plus évasée que ladite première partie. De la sorte, le carter présente longitudinalement une forme moyenne en hyperboloïde de révolution et ainsi une zone sensiblement concave, dans laquelle ladite pièce de renfort est susceptible d'être montée sans s'étendre en dehors de l'enveloppe moyenne tronconique du carter de la boîte de vitesse.

Ladite pièce de renfort comporte une partie prismatique, solidaire de ladite seconde partie tronconique et une partie en équerre solidaire de ladite première partie tronconique, ladite partie en équerre étant située dans le prolongement de ladite partie prismatique. De la sorte, la pièce de renfort peut présenter une partie plus massive et plus importante, la partie prismatique, qui est solidaire de la seconde partie tronconique, laquelle subit plus de contraintes que la première partie tronconique d'extrémité ; et présenter une partie moins importante, la partie en équerre dont elle est solidaire et qui est également solidaire de la première partie tronconique laquelle subit moins de contraintes.

Ladite partie en équerre, présente un grand côté et un petit côté, et ladite partie en équerre est montée vissée sur ladite première partie tronconique, ledit grand côté en appui contre ladite première partie tronconique, ledit petit côté en appui contre ladite partie prismatique, ladite partie en équerre étant avantageusement montée vissée avec ladite partie prismatique. De la sorte, les parties tronconiques peuvent être assemblées après avoir reçu respectivement l'une la partie prismatique de la pièce de renfort, l'autre la partie en équerre et ensuite, la partie prismatique et la partie en équerre peuvent être assemblées à leur tour pour ne former qu'une seule pièce de renfort rigide.

Avantageusement, ladite partie prismatique est moulée d'une seule pièce avec ladite seconde partie tronconique, par exemple en aluminium. Par conséquent, les coûts de réalisation et de montage de la partie prismatique se réduisent sensiblement au surcoût de matière.

Par ailleurs, ledit carter présentant une partie supérieure opposée à une partie inférieure, ladite pièce de renfort est montée dans ladite partie supérieure de façon à atténuer les modes de déformation principalement verticaux du groupe motopropulseur, qui sont les plus incommodants.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en coupe droite illustrant partiellement un groupe motopropulseur conforme à l'invention ; et,
- la Figure 2 est une vue schématique en perspective du groupe motopropulseur illustré à la Figure 1.

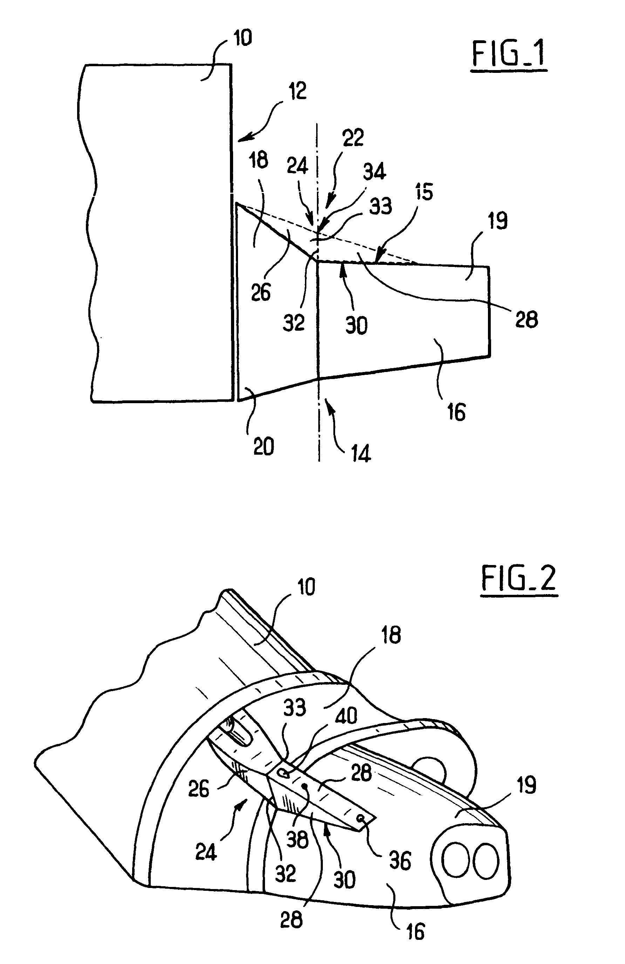

La Figure 1 montre schématiquement une carcasse 10 d'un moteur présentant une paroi latérale 12 dans laquelle est rapporté un carter 14 de boîte de vitesse. Le carter 14 présentant une paroi externe 15, comporte une première partie d'extrémité sensiblement tronconique 16 et une seconde partie de raccordement 18 sensiblement tronconiques également et interposée entre la carcasse du moteur et la première partie d'extrémité tronconique 16.

Cette dernière partie, moins évasée et terminée par une extrémité fermée 19, contient le mécanisme de boîte de vitesse, tandis que la seconde partie de raccordement 18, plus évasée, comporte elle, l'embrayage et le différentiel. Embrayage, entraînement différentiel et mécanisme de boîte de vitesses sont situés sensiblement dans le prolongement et dans l'axe de l'arbre moteur, non représenté.

Bien évidemment, la seconde partie de raccordement 18, qui présente une extrémité de raccordement 20, est montée dans le pourtour d'une ouverture ménagée dans la paroi latérale 12 de la carcasse 10 du moteur.

Ainsi que l'illustre la Figure 1, compte tenu de la différence de conicité, entre les deux parties tronconiques 16, 18, situé dans le prolongement l'une de l'autre, il apparaît une zone concave 22 dans laquelle est montée une pièce de renfort 24, formant nervure et qui s'étend longitudinalement sur le carter 14 à cheval sur les deux parties tronconiques 16, 18.

La pièce de renfort 24 comporte une partie sensiblement prismatique 26 solidaire de la seconde partie de raccordement 18, et une partie en équerre 28 solidaire de la première partie d'extrémité tronconique 16.

La partie en équerre 28 présente un grand côté 30 en applique sur la première partie tronconique 16 et un petit côté 32 en appui contre une extrémité 33 de la partie prismatique 26. Un plan de joint 34 entre la partie en équerre 28 et la partie prismatique 26 est sensiblement confondu avec le plan de jonction de la première partie tronconique 16 et de la seconde partie tronconique 18.

On se référera maintenant à la Figure 2, illustrant en perspective, et partiellement, le groupe motopropulseur illustré à la Figure 1. On y retrouve la carcasse 10 du moteur, la seconde partie tronconique de raccordement 18 et la première partie tronconique d'extrémité 16. En outre, on y retrouve également la pièce de renfort 24 comportant, la partie prismatique 26 et la partie en équerre 28.

Alors que la partie prismatique 26 est elle moulée d'une seule pièce avec la partie tronconique de raccordement 18, dans un matériau usuel de réalisation des carters, par exemple l'aluminium ou l'un de ses alliages, la partie en équerre 28, est elle rapportée sur la première partie d'extrémité tronconique 16 et en appui contre la partie prismatique 26.

La partie en équerre 28, réalisée également en aluminium par exemple, est pour ce faire, maintenue vissée sur la partie d'extrémité tronconique 16 avec des vis de fixation 36 et 38, et également vissée longitudinalement dans la partie prismatique 26 au moyen de vis de liaison 40. De la sorte, la partie en équerre 28 est entièrement solidaire de façon rigide, de la partie prismatique 26 de sorte que la première partie tronconique d'extrémité 16 et la seconde partie tronconique de raccordement 18 sont reliées ensemble de façons plus rigide.

Ainsi, en se reportant à la Figure 1, illustrant le groupe motopropulseur en coupe verticale, on comprend que la structure de la boîte de vitesses, et plus particulièrement le carter 14 dans lequel elle est logée, est plus rigide lorsqu'il est sollicité verticalement puisque son inertie vis-à-vis de la carcasse 10 du moteur, est globalement augmentée par l'intermédiaire de la pièce de renfort 24.

Grâce à cette pièce de renfort 24, les problèmes de bruit dans l'habitacle du véhicule automobile, générés par des modes globaux de déformation du groupe motopropulseur, sont considérablement atténués.

Par ailleurs, cette pièce de renfort 24 est susceptible d'être adaptée sur des structures de boîte de vitesses existantes sans qu'il soit nécessaire de modifier la liaison relativement délicate au niveau de l'étanchéité, entre la première partie tronconique 16 dans laquelle est logé le mécanisme de boîte de vitesses, et la seconde partie tronconique de raccordement 18 dans laquelle est logé l'entraînement différentiel et l'embrayage. De plus, le mode de mise en oeuvre adopté ne nécessite que de légères adaptations du carter existant. Pour la seconde partie tronconique de raccordement 18, ou carter d'embrayage, il est moulé aisément d'une seule pièce en fonderie d'aluminium par exemple, pour la première partie tronconique d'extrémité 16, de simples taraudages pour recueillir les vis de fixation de la partie en équerre 28 sont nécessaires

## Revendications

1. Groupe motopropulseur comprenant un moteur et une boîte de vitesse, ladite boîte de vitesse étant destinée à être logée dans un carter (14), ledit moteur comportant une carcasse (10) dans laquelle est pratiquée une ouverture de transmission, ledit carter comprenant deux parties sensiblement tronconiques, une première partie (16) prolongée par une seconde partie (18), ladite première partie (16) présentant une extrémité fermée (19), ladite seconde partie (18) présentant une extrémité de raccordement (20), ledit carter (14) présentant une paroi externe (15) et s'étendant longitudinalement en s'évasant progressivement, de l'extrémité fermée (19) vers l'extrémité de raccordement (20), ledit carter (14) étant raccordé sur l'ouverture de transmission par ladite extrémité de raccordement (20) de façon à s'étendre en saillie dudit moteur, ledit carter (14) étant équipé d'une pièce de renfort (24) montée solidaire de ladite paroi externe (15) et s'étendant longitudinalement sur le carter (14) à cheval sur les deux parties entre ladite extrémité fermée (19) et ladite extrémité de raccordement (20) en formant nervure, pour rigidifier ledit carter (14) et ladite carcasse (10), ladite pièce de renfort (24) comportant une partie prismatique (26), solidaire de ladite seconde partie (18) et une partie en équerre (28) solidaire de ladite première partie (16), ladite partie en équerre (28) étant située dans le prolongement de ladite partie prismatique (26) ; **caractérisé en ce que** ladite partie en équerre (28), présente un grand côté (30) et un petit côté (32),
et **en ce que** ladite partie en équerre. (28) est montée vissée sur ladite première partie tronconique (16), ledit grand côté (30) en appui contre ladite première partie tronconique, ledit petit côté en appui contre ladite partie prismatique (26) moyennant quoi les oscillations en battement de ladite boîte de vitesse par rapport audit moteur sont atténuées.

2. Groupe motopropulseur selon la revendication 1, **caractérisé en ce que**, entre la partie en équerre (28) et la partie prismatique (26) s'étend un plan de joint (34), ledit plan de joint (34) étant sensiblement confondu avec un plan de jonction de la première partie (16) et de la seconde partie (18).

3. Groupe motopropulseur selon la revendication 1 ou 2, **caractérisé en ce que**, ladite seconde partie (18) est plus évasée que ladite première partie (16).

4. Groupe motopropulseur selon l'une quelconque des revendication 1 à 3, **caractérisé en ce que** ladite partie en équerre (28) est montée vissée avec ladite partie prismatique (26).

5. Groupe motopropulseur selon l'une quelconque des revendications 1 à 4, **caractérisé en ce que** ladite partie prismatique (26) est moulée d'une seule pièce avec ladite seconde partie tronconique (18).

6. Groupe motopropulseur selon l'une quelconque des revendications 1 à 5, **caractérisé en ce que** ledit carter (14) présente une partie supérieure opposée à une partie inférieure, et **en ce que** ladite pièce de renfort (24) est montée dans ladite partie supérieure.

## Claims

1. Power plant comprising an engine and a gearbox, the said gearbox being intended to be housed in a casing (14), the said engine comprising a case (10) in which a transmission opening is made, the said casing comprising two substantially frustoconical parts, a first part (16) extended by a second part (18), the said first part (16) having a closed end (19), the said second part (18) have a coupling end (20), the said casing (14) having an external wall (15) and extending longitudinally widening gradually from the closed end (19) towards the coupling end (20), the said casing (14) being coupled to the transmission opening via the said coupling end (20) in such a way that it projects from the said engine, the said casing (14) being equipped with a reinforcing piece (24) mounted secured to the said external wall (15) and running longitudinally along the casing (14) straddling the two parts between the said closed end (19) and the said coupling end (20) thereby forming a rib to stiffen the said casing (14) and the said case (10), the said reinforcing piece (24) comprising a prismatic part (26) secured to the said second part (18) and a setsquare-shaped part (28) secured to the said first part (16), the said setsquare-shaped part (28) being positioned in the continuation of the said prismatic part (26); **characterized in that** the said setsquare-shaped part (28) has a long side (30) and a short side (32), and **in that** the said setsquare-shaped part (28) is screw-fastened to the said first frustoconical part (16), with the said long side (30) resting against the said first frustoconical part and the said short side resting against the said prismatic part (26) so that the oscillations whereby the said gearbox flaps with respect to the said engine are attenuated.

2. Power plant according to Claim 1, **characterized in that** between the setsquare-shaped part (28) and the prismatic part (26) there is a meeting plane (34), the said meeting plane (34) coinciding more or less with a plane where the first part (16) and the second part (18) meet.

3. Power plant according to Claim 1 or 2, **characterized in that** the said second part (18) is more steeply divergent than the said first part (16).

4. Power plant according to any one of Claims 1 to 3, **characterized in that** the said setsquare-shaped part (28) is screw-fastened to the said prismatic part (26).

5. Power plant according to any one of Claims 1 to 4, **characterized in that** the said prismatic part (26) is cast as a single piece with the said second frustoconical part (18).

6. Power plant according to any one of Claims 1 to 5, **characterized in that** the said casing (14) has an upper part opposite a lower part and **in that** the said reinforcing piece (24) is mounted in the said upper part.

## Patentansprüche

1. Antriebsaggregat mit einem Motor und einem Schaltgetriebe, wobei das Schaltgetriebe dazu bestimmt ist, in einem Getriebegehäuse (14) untergebracht zu werden, wobei der Motor ein Motorgehäuse (10) aufweist, in dem eine Getriebeöffnung ausgearbeitet ist, wobei das Getriebegehäuse zwei im Wesentlichen kegelstumpfförmige Teile aufweist, einen ersten Teil (16), der von einem zweiten Teil (18) verlängert wird, wobei der erste Teil (16) ein geschlossenes Ende (19) aufweist, der zweite Teil (18) ein Anschlussende (20) aufweist, wobei das Getriebegehäuse (14) eine Außenwand (15) aufweist und sich in Längsrichtung erstreckt, indem es sich progressiv vom geschlossenen Ende (19) zum Anschlussende (20) verbreitert, wobei das Getriebegehäuse (14) an die Getriebeöffnung über das Anschlussende (20) angeschlossen ist, um sich vom Motor vorstehend zu erstrecken, wobei das Getriebegehäuse (14) mit einem Verstärkungsbauteil (24) ausgestattet ist, das fest mit der Außenwand (15) verbunden montiert ist und sich in Längsrichtung auf dem Getriebegehäuse (14) zu beiden Seiten überlappend auf den zwei Teilen zwischen dem geschlossenen Ende (19) und dem Anschlussende (20) erstreckt, indem es eine Rippe bildet, um das Getriebegehäuse (14) und das Motorgehäuse (10) zu versteifen, wobei das Verstärkungsbauteil (24) einen prismatischen Teil (26), der fest mit dem zweiten Teil (18) verbunden ist, und einen Winkelteil (28) aufweist, der fest mit dem ersten Teil (16) verbunden ist, wobei der Winkelteil (28) sich in der Verlängerung des prismatischen Teils (26) befindet, **dadurch gekennzeichnet, dass** der Winkelteil (28) eine große Seite (30) und eine kleine Seite (32) aufweist, und dass der Winkelteil (28) geschraubt auf den ersten kegelstumpfförmigen Teil (16) montiert ist, wobei die große Seite (30) gegen den ersten kegelstumpfförmigen Teil, die kleine Seite gegen den prismatischen Teil (26) anliegt, wodurch die Schwingungen des Schaltgetriebes bezüglich des Motors gedämpft werden.

2. Antriebsaggregat nach Anspruch 1, **dadurch gekennzeichnet, dass** sich zwischen dem Winkelteil (28) und dem prismatischen Teil (26) eine Trennfuge (34) erstreckt, wobei die Trennfuge (34) im Wesentlichen mit einer Verbindungsebene des ersten Teils (16) und des zweiten Teils (18) zusammenfällt.

3. Antriebsaggregat nach Anspruch 1 oder 2, **dadurch gekennzeichnet, dass** der zweite Teil (18) stärker verbreitert ist als der erste Teil (16).

4. Antriebsaggregat nach einem der Ansprüche 1 bis 3, **dadurch gekennzeichnet, dass** der Winkelteil (28) mit dem prismatischen Teil (26) verschraubt montiert ist.

5. Antriebsaggregat nach einem der Ansprüche 1 bis 4, **dadurch gekennzeichnet, dass** der prismatische Teil (26) in einem Stück mit dem zweiten kegelstumpfförmigen Teil (18) geformt ist.

6. Antriebsaggregat nach einem der Ansprüche 1 bis 5, **dadurch gekennzeichnet, dass** das Getriebegehäuse (14) einen oberen Teil gegenüber einem unteren Teil aufweist, und dass das Verstärkungsbauteil (24) in den oberen Teil montiert ist.
